# EUROPÄISCHE PATENTSCHRIFT

(11) **EP 3 988 905 B1**
(45) Veröffentlichungstag und Bekanntmachung des Hinweises auf die Patenterteilung: **10.05.2023**
(21) Anmeldenummer: 20203266.0
(22) Anmeldetag: 22.10.2020
(51) Int. Cl.: G01F 1/66, G01F 15/00, F15D 1/02

(54) **DURCHFLUSSMESSSYSTEM**
FLOW METERING SYSTEM
SYSTÈME DE DÉBITMÈTRE

(43) Veröffentlichungstag der Anmeldung: 27.04.2022
(73) Patentinhaber: SICK Engineering GmbH, 01458 Ottendorf-Okrilla (DE)
(72) Erfinder: KÜNZELMANN, Mario, 01187 Dresden (DE)
(74) Vertreter: Manitz Finsterwald Patent- und Rechtsanwaltspartnerschaft mbB

(56) Entgegenhaltungen:
- WO-A1-2019/161716
- WO-A2-2005/019778
- KR-B1- 101 681 007
- US-A- 5 363 699
- US-A1- 2014 338 771

## Beschreibung

Die Erfindung betrifft ein Durchflussmesssystem zur Messung eines Fluiddurchflusses durch ein Rohr mit einem Messgerät, vorzugsweise einem Ultraschallmessgerät, zur Durchführung einer Messung an dem Fluid, insbesondere seiner Strömungsgeschwindigkeit, und einem stromaufwärts des Messgerätes angeordneten Strömungsgleichrichter zum Konditionieren einer Fluidströmung, der ein Rohr umfasst, das eine Rohrachse aufweist und in Richtung der Rohrachse von einem Fluid durchströmbar ist.

In vielen Bereichen der Technik sind Messungen an strömenden Fluiden, das heißt Gasen oder Flüssigkeiten, durchzuführen. Beispielsweise können Strömungsgeschwindigkeiten von strömenden Fluiden in Rohrleitungen oder Kanälen mittels Ultraschallmesstechnik nach dem Differenzlaufzeitverfahren ermittelt werden. Eine entsprechende Ultraschallmessvorrichtung und ein entsprechendes Verfahren sind beispielsweise in der DE 10 2016 112 295 A1 beschrieben. Auf der Grundlage der Strömungsgeschwindigkeit und der Querschnittsfläche der Rohrleitung oder des Kanals kann der Volumenstrom des durch die Rohrleitung strömenden Fluids ermittelt werden. Derartige Volumenstrom-Messvorrichtungen werden häufig in Form von Zählern eingesetzt, um Liefer- und/oder Verbrauchsmengen von Gasen oder Flüssigkeiten zu ermitteln.

Bei solchen Messungen ist allgemein ein möglichst gleichmäßiges Strömungsprofil erwünscht, um eine hohe Messgenauigkeit zu gewährleisten. In der Praxis liegen jedoch häufig inhomogene oder gestörte Strömungsprofile vor. Um die erforderliche Genauigkeit trotzdem zu gewährleisten, kann das Strömungsprofil mittels mehrerer Messpfade abgetastet werden, was jedoch mit einem hohen Aufwand verbunden ist. Eine andere Möglichkeit zur Erhöhung der Messgenauigkeit besteht darin, stromaufwärts der Mess-Stelle einen Strömungsgleichrichter anzuordnen. Strömungsgleichrichter, wie sie beispielsweise in der EP 2 607 718 A1 offenbart sind, dienen dazu, gestörte Strömungsprofile vor der Mess-Stelle wieder in Richtung ungestörter Strömungen zu konditionieren. Bekannte Strömungsgleichrichter können Platten, Bleche und Innenrohre aufweisen, die in Richtung einer ungestörten Strömung ausgerichtet sind. Durch derartige Komponenten kann insbesondere einem Drall in der Strömung erfolgreich entgegengewirkt werden. Eine möglicherweise vorliegende Schiefheit der Strömung kann durch die genannten Bauteile jedoch im Allgemeinen nicht behoben werden. Außerdem ist es in der Praxis schwierig, gleichzeitig eine hohe Konditionierungswirkung und einen geringen Druckverlust sowie eine geringe Baugröße zu erzielen.

Die WO 2019/161716 A1 offenbart eine Drosselkomponente mit einem zentralen stabartigen Element, das von mehreren hohlprofilartigen Elementen in einer koaxialen Anordnung umgeben ist. Das zentrale Element kann eine abgerundete Anströmungsseite aufweisen.

Die US 5 363 699 A offenbart einen Strömungsgleichrichter mit zwei sternförmigen Leitplattenanordnungen sowie einem Verdrängungskörper.

Die KR 101 681 007 B1 offenbart einen Wärmetauscher, in dessen Kühlmittelröhren Anordnungen aus Turbulenzerzeugern und Stromführungseinheiten angeordnet sind.

Ein Durchflussmesssystem mit einem Messgerät und einem Strömungsgleichrichter ist in der US 2014/0338771 A1 offenbart.

Die WO 2005/019778 A2 offenbart ein Durchflussmesssystem mit einem Strömungsgleichrichter in Form eines Nabenkörpers mit einem konischem Anströmbereich, einem Diffusor-Abschnitt im Abströmbereich und einer hinterseitigen Abrisskante für die Strömung gemäß dem Stand der Technik.

Man ist bestrebt, eine weiter verbesserte Strömungskonditionierung zu ermöglichen und insbesondere den Druckverlust und die Baugröße der dazu verwendeten Strömungsgleichrichter zu verringern, ohne dass es zu unerwünschten Ablösungen oder Turbulenzen kommt.

Diese Aufgabe wird mit einem Durchflussmesssystem mit einem Strömungsgleichrichter zum Konditionieren einer Fluidströmung mit den Merkmalen des Anspruchs 1 gelöst.

Der Strömungsgleichrichter eines erfindungsgemäßen Durchflussmesssystems umfasst wenigstens einen Nabenkörper, der bezüglich einer Symmetrieachse rotationssymmetrisch ist und derart in dem Rohr fixiert ist, dass die Symmetrieachse mit der Rohrachse zusammenfällt, wobei der in dem Rohr fixierte Nabenkörper einen entgegen der Anströmrichtung nach außen gewölbten Anströmbereich aufweist.

Der Nabenkörper ist also ähnlich geformt und angeordnet wie die Nabe eines Rotors, jedoch im Gegensatz zu einer solchen nicht drehbar gelagert, sondern am Rohr festgelegt.

Es hat sich herausgestellt, dass ein solcher Nabenkörper selbst bei vergleichsweise geringer axialer Länge in der Lage ist, unabhängig von der Anströmungs-Charakteristik ein zumindest weitgehend gleichmäßiges Strömungsprofil zu erzeugen und Störungen zu beheben. Im Gegensatz zu einer Platte mit quer zur Strömungsrichtung ausgerichteter Flächennormale ermöglicht der Nabenkörper eines erfindungsgemäßen Strömungsgleichrichters einen radialen Impulsaustausch und kann dadurch auch einer eventuellen Schiefheit der Strömung entgegenwirken. Dadurch dass der Anströmbereich entgegen der Anströmrichtung nach außen gewölbt (also konvex) ist, weist der erfindungsgemäße Strömungsgleichrichter selbst dann einen geringen Druckverlust auf, wenn der Anströmbereich relativ groß ist. Wegen der geringeren Mindestlänge benötigt der erfindungsgemäße Strömungsgleichrichter nur wenig Bauraum. Ferner kann der Energiebedarf einer zugehörigen, die Strömung bewirkenden Pumpe aufgrund des geringen Druckverlusts gering gehalten werden. Die koaxiale Ausrichtung des rotationssymmetrischen Nabenkörpers im Rohr verhindert das Erzeugen von Störungen durch den Nabenkörper selbst.

Ein besonderer Vorteil der Erfindung besteht darin, dass die Kennlinie eines erfindungsgemäßen Strömungsgleichrichters, welche einen durchschnittlichen Rohfehler in Abhängigkeit vom Volumenstrom repräsentiert, aufgrund des Nabenkörpers vergleichsweise flach ist und insbesondere bei geringen Volumenstrom-Werten nicht wie bei gängigen Systemen steil ansteigt. Dies ermöglicht eine besonders robuste Messung und ist vor allem für die Durchführung von Kalibrierungen vorteilhaft, weil keine komplexe Korrekturfunktion gehandhabt werden muss. Stattdessen kann die Kalibrierung im einfachsten Fall durch Addition eines Offset-Werts bewerkstelligt werden.

Es kann vorgesehen sein, dass der Nabenkörper einen bezüglich der Rohrachse radial zu messenden Außendurchmesser von wenigstens 40%, bevorzugt wenigstens 50%, weiter bevorzugt wenigstens 60% und besonders bevorzugt wenigstens 70% des Innendurchmessers des Rohrs beträgt.

Erfindungsgemäß ist vorgesehen, dass die Querschnittsfläche des Anströmbereichs wenigstens 50% und bevorzugt wenigstens 60% der Querschnittsfläche des Rohrs beträgt. Hierbei sind, falls der Außendurchmesser des Nabenkörpers und/oder der Innendurchmesser des Rohrs entlang der Rohrachse variiert, der Außendurchmesser des Nabenkörpers und der Innendurchmesser des Rohrs an der gleichen axialen Position zu bestimmen, beispielsweise an derjenigen Position, an welcher der Außendurchmesser des Nabenkörpers maximal ist. Unter dem Begriff "Querschnittsfläche" kann die strömungswirksame Querschnittsfläche oder die entlang der Rohrachse maximale Querschnittsfläche zu verstehen sein. Ein voluminöser Nabenkörper ist in der Lage, ein bestehendes, gestörtes Strömungsprofil gewissermaßen aufzubrechen, um so den Aufbau eines gleichmäßigen Strömungsprofils im nachfolgenden Rohrabschnitt zu ermöglichen.

Der Nabenkörper weist einen Diffusor-Abschnitt auf, in welchem sich die Querschnittsfläche des Nabenkörpers entlang der Rohrachse in stromabwärts weisender Richtung verringert. Der Diffusor-Abschnitt sorgt für eine Verlangsamung des an dem Nabenkörper vorbeiströmenden Fluids. Der Diffusor-Abschnitt schließt sich an den gewölbten Anströmbereich des Nabenkörpers in stromabwärts weisender Richtung an, wobei am stromabwärts gelegenen Ende des Nabenkörpers eine Stufe ausgebildet ist. Bevorzugt erstreckt sich der Diffusor-Abschnitt bis zu einem stromabwärtigen Ende des Nabenkörpers. Stromabwärts des Nabenkörpers kann sich ein stabilisiertes Strömungsfeld ausbilden.

Gemäß der Erfindung ist der Nabenkörper mittels wenigstens eines flächigen, also zum Beispiel plattenartigen, Stegs in dem Rohr fixiert. Der Nabenkörper kann hierbei einstückig mit dem Steg und/oder mit dem Rohr ausgebildet sein. Vorzugsweise ist die Flächennormale des flächigen Stegs quer zur Rohrachse ausgerichtet. Der flächige Steg hält nicht nur den Nabenkörper in der gewünschten Position, sondern wirkt auch einem Drall entgegen, das heißt er erfüllt eine Doppelfunktion. Die axiale Länge des Strömungsgleichrichters kann trotz der zusätzlichen drallreduzierenden Komponente gering gehalten werden.

Es kann vorgesehen sein, dass der wenigstens eine flächige Steg eine Innenwand des Rohrs mit einer radial nach außen weisenden Oberfläche des Nabenkörpers verbindet.

Eine spezielle Ausgestaltung sieht vor, dass der Nabenkörper mittels einer sternförmigen Anordnung von flächigen Stegen in dem Rohr fixiert ist. Die sorgt für einen sicheren Halt sowie zusätzlich für eine gleichmäßig entlang des Umfangs des Nabenkörpers verteilte Strömungsbeeinflussung.

Der Anströmbereich kann eine kuppelartige Wölbung aufweisen. Dies sorgt für einen geringen Strömungswiderstand des Nabenkörpers und vermeidet Verwirbelungen. Die Wölbung kann beispielsweise eine sphärische Form aufweisen. Der Krümmungsradius kann hierbei anwendungsspezifisch angepasst sein. Je nach Anwendung kann der Anströmbereich zum Beispiel halbkugelförmig oder leicht abgeplattet sein.

Die Erfindung sieht vor, dass der Nabenkörper im Querschnitt ringförmig ist und einen zentralen Durchgangskanal aufweist. Dadurch wird eine Kernströmung erzeugt, die den Aufbau einer gleichmäßigen Strömung im Nachlauf des Nabenkörpers unterstützt. Bevorzugt ist der Nabenkörper im Querschnitt kreisringförmig. Der Anströmbereich des ringförmigen Nabenkörpers kann, zumindest zur Anströmseite hin, eine Torus-artige Wölbung aufweisen. Der Längsschnitt durch die Wölbung einer der radialen Hälften des ringförmigen Nabenkörpers kann beispielsweise halbkreisförmig sein. Es sind aber auch andere Formen möglich.

Der zentrale Durchgangskanal kann einen Durchmesser aufweisen, der entlang der Rohrachse in stromabwärts weisender Richtung ansteigt. Ein derartiger Durchgangskanal bildet einen Diffusor, der eine Verlangsamung des durch den Kanal strömenden Fluids bewirkt. Falls an der radialen Außenseite des Nabenkörpers wie vorstehend beschrieben ebenfalls ein Diffusor-Abschnitt gebildet ist, kann der zentrale Durchgangskanal so gestaltet sein, dass die Geschwindigkeitsniveaus der zentralen Strömungskomponente und der radial äußeren Strömungskomponente hinter dem Nabenkörper etwa gleich sind.

Gemäß einer weiteren Ausführungsform der Erfindung ist in dem zentralen Durchgangskanal ein rotationssymmetrischer Zusatzkörper koaxial zu dem ringförmigen Nabenkörper angeordnet. Es hat sich gezeigt, dass ein solcher Zusatzkörper die Strömungskonditionierung weiter verbessert. Der Zusatzkörper kann wie der Nabenkörper einen entgegen der Anströmrichtung nach außen gewölbten Anströmbereich aufweisen, um den Strömungswiderstand gering zu halten. Das heißt der Zusatzkörper kann einen weiteren, inneren Nabenkörper bilden.

Der Zusatzkörper kann ebenfalls im Querschnitt ringförmig, vorzugsweise kreisringförmig, sein. Dadurch ist ein weiterer, innerer Durchgangskanal gebildet, so dass die einlaufende Strömung insgesamt in mehr Teilströmungen aufgeteilt wird.

In dem ringförmigen Zusatzkörper kann ein innerer Durchgangskanal ausgebildet sein, dessen Durchmesser entlang der Rohrachse in stromabwärts weisender Richtung ansteigt. Dadurch ist eine weitere Diffusor-Komponente gebildet, welche die Kernströmung stabilisiert.

Der Nabenkörper und der Zusatzkörper können gemeinsam eine anströmbare Querschnittsfläche aufweisen, die wenigstens 30%, vorzugsweise wenigstens 40% und besonders bevorzugt wenigstens 50% der Querschnittsfläche des Rohrs beträgt. Dadurch wird eine ankommende gestörte Strömung besonders wirksam aufgebrochen.

Grundsätzlich können auch mehrere entsprechend ausgestaltete koaxial zueinander angeordnete Zusatzkörper ineinander angeordnet sein.

Es ist bevorzugt, dass das Rohr einen Innendurchmesser von wenigstens 10 mm und höchstens 500 mm, vorzugsweise von wenigstens 20 mm und höchstens 200 mm, aufweist. Bei solchen Rohrgrößen kommen die Vorteile eines erfindungsgemäßen Strömungsgleichrichters besonders ausgeprägt zur Geltung. Ein erfindungsgemäßer Strömungsgleichrichter ist jedoch grundsätzlich auf einfache Weise in einem vergleichsweise weiten Größenbereich skalierbar.

Gemäß einer weiteren Ausführungsform der Erfindung weist der Strömungsgleichrichter eine stromabwärts des Nabenkörpers angeordnete (das heisst, an dessen stromabwärtigem Ende oder in Strömungsrichtung dahinter) Strömungsleiteinrichtung auf, die wenigstens eine Lochplatte, einen Wabenkörper, ein Rohrbündel und/oder eine Düse umfasst. Mit einer Lochplatte lässt sich ein Aufbrechen der Impulsbilanz aller Geschwindigkeitskomponenten im gesamten Rohrquerschnitt erreichen. Ein nicht symmetrisches axiales Geschwindigkeitsprofil wird durch dieses Aufbrechen gleichmäßiger. Vorzugsweise weist die Lochplatte eine Vierkantlochung auf. Der Wabenkörper, welcher durch dünne Wände getrennte Durchgänge mit zum Beispiel sechseckigem Querschnitt umfassen kann, weist eine Siebwirkung auf und beruhigt dadurch die Strömung. Die durch die Düse gebildete Verengung kann im Längsschnitt einen gekrümmten oder einen abschnittsweise linearen Verlauf aufweisen. Der Nabenkörper und die Strömungsleiteinrichtung können eine Konditionierungseinheit bilden.

Eine bevorzugte Ausgestaltung sieht vor, dass die Strömungsleiteinrichtung eine Lochplatte und einen stromabwärts davon angeordneten Wabenkörper umfasst. Es hat sich herausgestellt, dass es mit einer Kombination aus einem Nabenkörper, einer stromabwärts davon angeordneten Lochplatte und einem stromabwärts der Lochplatte angeordneten Wabenkörper möglich ist, die Strömung praktisch vollständig ablösefrei zu konditionieren und dabei die axiale Länge des Strömungsgleichrichters auf einen akzeptablen Wert zu beschränken.

Der Strömungsgleichrichter kann eine axiale Länge aufweisen, die höchstens das Doppelte und vorzugsweise höchstens das 1½ -fache des Innendurchmessers des Rohrs beträgt und/oder die einen Druckverlustbeiwert aufweist, der höchstens 8 und vorzugsweise höchstens 5,5 beträgt. Es ist aufgrund der erfindungsgemäßen Ausgestaltung möglich, besonders platzsparende und/oder besonders wenig Druckverlust verursachende Strömungsgleichrichter bereitzustellen. Es kann aufgrund der Erfindung sogar möglich sein, die axiale Länge des Strömungsgleichrichters geringer als den Innendurchmesser des Rohrs zu halten und trotzdem eine akzeptable Strömungskonditionierung zu gewährleisten. Auch die Einlauflänge, also die axiale Ausdehnung des zwischen der letzten Komponente des Strömungsgleichrichters und der Mess-Stelle vorhandenen Rezirkulationsgebiets, kann aufgrund der erfindungsgemäßen Ausgestaltung gering gehalten werden. Die mit dem erfindungsgemäßen Strömungsgleichrichter erreichte Konditionierung der Strömung vermindert Störungen durch unregelmäßige Strömung, durch Drall, durch eine ungleichmäßige Verteilung der axialen Geschwindigkeitskomponenten oder durch ungünstige signalakustische Effekte auf Grund von Turbulenzen derart, dass die Bestimmung der Laufzeitdifferenz einer Ultraschallmessung zur Bestimmung der Fluidgeschwindigkeit sehr genau möglich ist.

Die Erfindung wird nachfolgend beispielhaft unter Bezugnahme auf die Zeichnungen beschrieben.
- Fig. 1: zeigt einen Strömungsgleichrichter gemäß einer ersten Ausführungsform der Erfindung in einer perspektivischen Darstellung schräg von vorn.
- Fig. 2: ist eine seitliche Schnittansicht des Strömungsgleichrichters gemäß Fig. 1.
- Fig. 3: ist eine seitliche Schnittansicht eines Strömungsgleichrichters gemäß einer zweiten Ausführungsform der Erfindung.

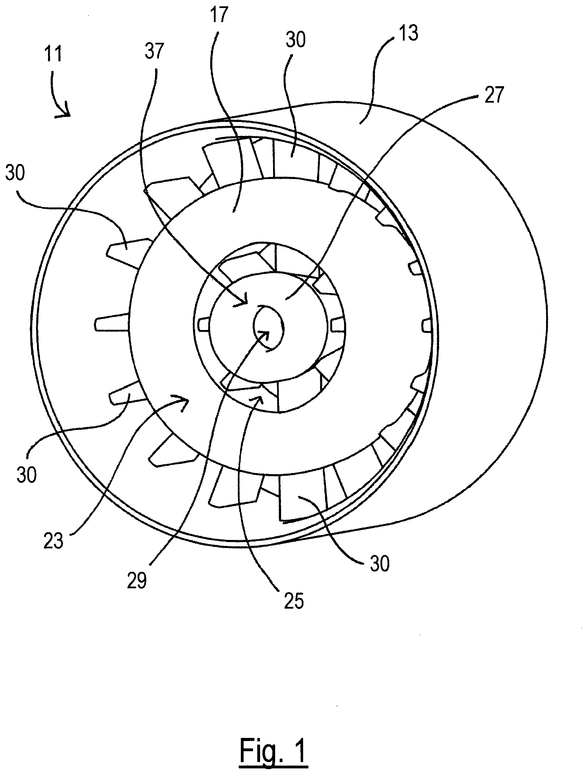

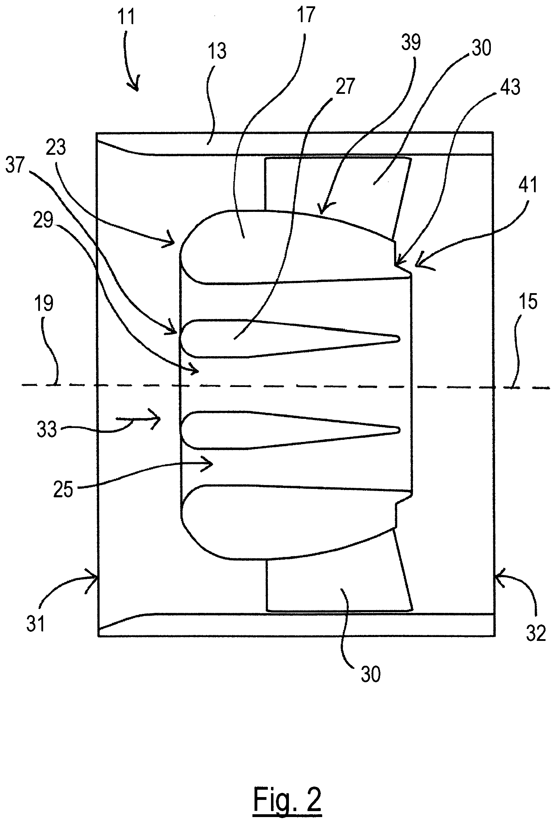

Der in Fig. 1 und 2 gezeigte Strömungsgleichrichter 11 umfasst ein Rohr 13, das einen zumindest im Wesentlichen geradlinigen Verlauf aufweist und dementsprechend eine Rohrachse 15 (Fig. 2) definiert. Das Rohr 13 ist, zum Beispiel als Zwischenglied, in einen nicht dargestellten Strömungskanal einsetzbar, so dass es in Richtung der Rohrachse 15 von einem Fluid, vorzugsweise von einem Gas, durchströmbar ist.

In dem Rohr 13 ist ein ringförmiger Nabenkörper 17 angeordnet, der bezüglich einer Symmetrieachse 19 rotationssymmetrisch ist und einen gewölbten Anströmbereich 23 aufweist. Der Nabenkörper 17 ist derart positioniert, dass die Symmetrieachse 19 mit der Rohrachse 15 zusammenfällt.

In dem durch den ringförmigen Nabenkörper 17 gebildeten zentralen Durchgangskanal 25 befindet sich ein rotationssymmetrischer Zusatzkörper 27. Dieser ist ebenfalls ringförmig und wie gezeigt koaxial zu dem ringförmigen Nabenkörper 17 angeordnet. Aufgrund der Ringform ist durch den Zusatzkörper 27 ein innerer Durchgangskanal 29 gebildet.

Der Nabenkörper 17 und der Zusatzkörper 27 sind mittels einer sternförmigen Anordnung von flächigen Stegen 30 in dem Rohr 13 fixiert. Die flächigen Stege 30 sind so ausgerichtet, dass ihre Flächennormalen quer zur Rohrachse 15 weisen. Das Rohr 13, die Stege 30, der Nabenkörper 17 und der Zusatzkörper 27 sind vorzugsweise aus Kunststoff gefertigt. Sie können durch ein einzelnes Spritzgussbauteil gebildet sein.

Das Rohr 13 weist eine Eingangsseite 31 und eine Ausgangsseite 32 auf. Im Betrieb des Strömungsgleichrichters 11 werden der Nabenkörper 17 und der Zusatzkörper 27 von der Eingangsseite 31 her in einer Anströmrichtung 33 angeströmt. Wie insbesondere in Fig. 2 erkennbar ist, ist der zur Eingangsseite 31 weisende Anströmbereich 23 des Nabenkörpers 17 entgegen der Anströmrichtung 33 nach außen gewölbt. Ebenso ist der zur Eingangsseite 31 weisende Anströmbereich 37 des Zusatzkörpers 27 entgegen der Anströmrichtung 33 nach außen gewölbt. Dadurch ergibt sich eine Stromlinienform des Nabenkörpers 17 und des Zusatzkörpers 27.

An den Anströmbereich 23 des Nabenkörpers 17 schließt sich in stromabwärts weisender Richtung ein Diffusor-Abschnitt 39 an, in welchem sich die Querschnittsfläche des Nabenkörpers 17 entlang der Rohrachse 15 in Anströmrichtung 33 gesehen kontinuierlich verringert. Am stromabwärts gelegenen Ende 41 des Nabenkörpers 17 ist bei der gezeigten Ausgestaltung eine Stufe 43 ausgebildet, die zusätzlich einen Hinterkanteneffekt bewirkt, also einen gezielten Strömungsabriss, der zum Beispiel bei sehr ungünstiger Zuströmung eine minimale Ablösung erzeugen kann, welche sich dann rotationssymmetrisch ausbildet. Eine zu lange axiale Ablösung kann dadurch auch bei sehr ungünstiger Zuströmung weiter verringert und das globale Strömungsprofil weiter verbessert werden.

Der Durchmesser des zentralen Durchgangskanals 25 steigt wie dargestellt entlang der Rohrachse 15 in stromabwärts weisender Richtung, also in der Anströmrichtung 33, nach dem Anströmbereich 23 kontinuierlich an. Auch der Durchmesser des inneren Durchgangskanals 29 steigt zumindest im hinteren Abschnitt entlang der Rohrachse 15 in stromabwärts weisender Richtung an. Somit gibt es zusätzlich zu dem Diffusor-Abschnitt 39 des Nabenkörpers 17 zwei weitere Bereiche mit Diffusor-Wirkung, nämlich den inneren Durchgangskanal 29 und den radial außerhalb des Zusatzkörpers 27 gelegenen Abschnitt des zentralen Durchgangskanals 25.

Der Nabenkörper 17 und der Zusatzkörper 27 weisen bei dem dargestellten Ausführungsbeispiel gemeinsam eine anströmbare Querschnittsfläche auf, die etwa 45% der Querschnittsfläche des Rohrs 13 beträgt. Vorzugsweise beträgt die anströmbare Querschnittsfläche wenigstens 30% und höchstens 95% der Querschnittsfläche des Rohrs 13.

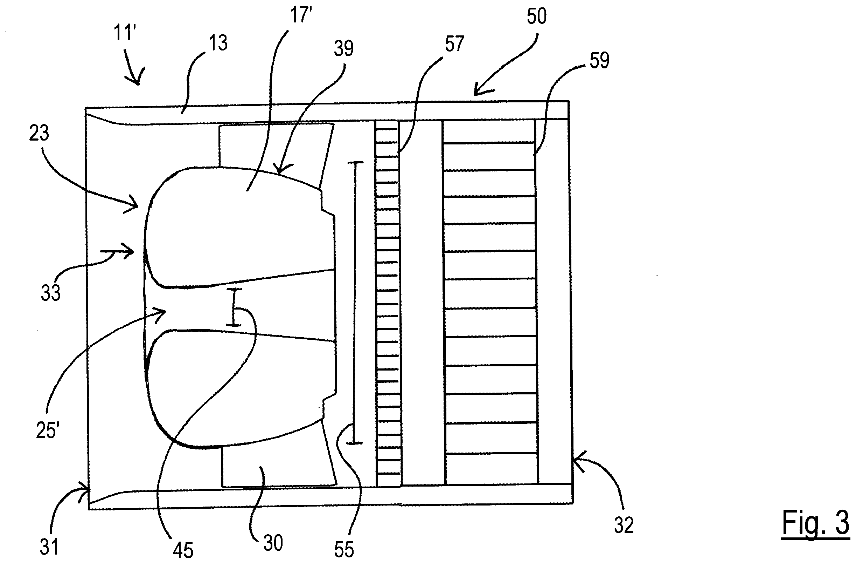

Der in Fig. 3 gezeigte Strömungsgleichrichter 11' weist ebenfalls ein Rohr 13 mit einem darin angeordneten Nabenkörper 17' auf. Wie bei der zuvor beschriebenen Ausführungsform ist der Nabenkörper 17' ringförmig und weist einen zentralen Durchgangskanal 25' auf. In diesem ist jedoch kein Zusatzkörper angeordnet. Ferner beträgt hier der minimale Durchmesser 45 des zentralen Durchgangskanals 25' lediglich etwa 14% des maximalen Durchmessers 55 des Nabenkörpers 17', das heißt der zentrale Durchgangskanal 25' ist vergleichsweise klein.

Ferner ist bei dem Strömungsgleichrichter 11' gemäß Fig. 3 eine Strömungsleiteinrichtung 50 vorgesehen. Diese ist stromabwärts des Nabenkörpers 17' angeordnet und umfasst eine Lochplatte 57 sowie einen stromabwärts der Lochplatte 57 positionierten Wabenkörper 59. Die Kombination aus dem beschriebenen Nabenkörper 17', der Lochplatte 57 und dem Wabenkörper 59 hat sich hinsichtlich der Verhinderung von Ablösungen als besonders wirksam erwiesen.

Prinzipiell kann auch der in Fig. 1 und 2 gezeigte Nabenkörper 17 einschließlich des Zusatzkörpers 27 mit einer Lochplatte 57 und einem Wabenkörper 59 wie in Fig. 3 gezeigt kombiniert werden.

Bei einem nicht dargestellten Ausführungsbeispiel ist eine Strömungsleiteinrichtung mit wenigstens einem stromabwärtigen Düsenabschnitt vorgesehen, in welchem das Rohr eine Verengung aufweist. Bei einem ebenfalls nicht gezeigten Ausführungsbeispiel weist der Nabenkörper keinen zentralen Durchgangskanal auf, wobei der Anströmbereich eine geschlossene, kuppelartige Fläche aufweist.

Die beschriebenen Strömungsgleichrichter 11, 11' werden zum Konditionieren von Fluidströmungen eingesetzt und hierfür jeweils in einen Strömungskanal, zum Beispiel eine Gasleitung, eingesetzt. Im Nachlauf des Strömungsgleichrichters 11, 11' ist ein Messgerät wie zum Beispiel ein Ultraschallmessgerät vorgesehen, mit dem in an sich bekannter Weise der Fluiddurchfluss durch den Strömungskanal gemessen werden kann.

In der Strömung vorhandene Störungen, wie sie zum Beispiel durch Kurven oder Engstellen stromaufwärts des Strömungsgleichrichters 11, 11' hervorgerufen werden, werden durch den Strömungsgleichrichter 11, 11' wirksam bekämpft. Dabei bricht der Nabenkörper 17, 17' die gestörte Strömung auf und spaltet sie in eine Kernströmung und eine oder zwei Ringströmungen auf. Beim Passieren des Nabenkörpers 17, 17' werden die Teilströmungen aufgrund der Diffusor-Wirkung verlangsamt und stabilisiert. Die flächigen Stege 30 reduzieren gleichzeitig einen allfällig vorhandenen Drall. Im Nachlauf des Strömungsgleichrichters 11, 11' kommt es zu einer Durchmischung, bei der ein axialer und radialer Impulsaustausch stattfindet und die Strömung insgesamt gleichmäßiger wird. Von besonderem Vorteil ist hierbei, dass eine akzeptable Konditionierung bereits mit einem relativ kurzen erfindungsgemäßen Strömungsgleichrichter 11, 11', einer kurzen Einlauflänge und unter Inkaufnahme eines relativ geringen Druckverlusts möglich ist.

### Bezugszeichenliste:

- 11, 11': Strömungsgleichrichter
- 13: Rohr
- 15: Rohrachse
- 17, 17': Nabenkörper
- 19: Symmetrieachse
- 23: Anströmbereich
- 25, 25': zentraler Durchgangskanal
- 27: Zusatzkörper
- 29: innerer Durchgangskanal
- 30: Steg
- 31: Eingangsseite
- 32: Ausgangsseite
- 33: Anströmrichtung
- 37: Anströmbereich des Zusatzkörpers
- 39: Diffusor-Abschnitt des Nabenkörpers
- 41: stromabwärts gelegenes Ende
- 43: Stufe
- 45: Durchmesser des zentralen Durchgangskanals
- 50: Strömungsleiteinrichtung
- 55: Durchmesser des Nabenkörpers
- 57: Lochplatte
- 59: Wabenkörper

## Patentansprüche

1. Durchflussmesssystem zur Messung eines Fluiddurchflusses durch ein Rohr, mit einem Messgerät, vorzugsweise einem Ultraschallmessgerät, zur Durchführung einer Messung an dem Fluid, insbesondere seiner Strömungsgeschwindigkeit, und einem stromaufwärts des Messgerätes angeordneten Strömungsgleichrichter (11, 11') zum Konditionieren einer Fluidströmung, der umfasst:
ein Rohr (13), das eine Rohrachse (15) aufweist und in Richtung der Rohrachse (15) von einem Fluid durchströmbar ist, wobei
der Strömungsgleichrichter (11, 11') wenigstens einen Nabenkörper (17, 17') umfasst, der bezüglich einer Symmetrieachse (19) rotationssymmetrisch ist und derart in dem Rohr (13) fixiert ist, dass die Symmetrieachse (19) mit der Rohrachse (15) zusammenfällt, wobei der in dem Rohr (13) fixierte Nabenkörper (17, 17') einen entgegen der Anströmrichtung (33) nach außen gewölbten Anströmbereich (23) aufweist,
wobei der Nabenkörper (17, 17') einen Diffusor-Abschnitt (39) aufweist, in welchem sich die Querschnittsfläche des Nabenkörpers (17, 17') entlang der Rohrachse (15) in stromabwärts weisender Richtung verringert,
wobei die Querschnittsfläche des Anströmbereichs (23) wenigstens 50% und bevorzugt wenigstens 60% der Querschnittsfläche des Rohrs (13) beträgt, wobei sich der Diffusor-Abschnitt (39) an den gewölbten Anströmbereich (23) des Nabenkörpers (17, 17') in stromabwärts weisender Richtung anschließt,
wobei am stromabwärts gelegenen Ende (41) des Nabenkörpers (17) eine Stufe (43) ausgebildet ist,
**dadurch gekennzeichnet, dass** der Nabenkörper (17, 17') mittels wenigstens eines flächigen Stegs (30) in dem Rohr (13) fixiert ist, und dass der Nabenkörper (17, 17') im Querschnitt ringförmig ist und einen zentralen Durchgangskanal (25, 25') aufweist.

2. Durchflussmesssystem nach Anspruch 1,
**dadurch gekennzeichnet,**
**dass** der Nabenkörper (17, 17') einen bezüglich der Rohrachse (15) radial zu messenden Außendurchmesser (55) von wenigstens 40%, bevorzugt wenigstens 50%, weiter bevorzugt wenigstens 60% und besonders bevorzugt wenigstens 70% des Innendurchmessers des Rohrs (13) beträgt.

3. Durchflussmesssystem nach einem der vorstehenden Ansprüche,
**dadurch gekennzeichnet,**
**dass** der Nabenkörper (17, 17') mittels einer sternförmigen Anordnung von flächigen Stegen (30) in dem Rohr (13) fixiert ist.

4. Durchflussmesssystem nach einem der vorstehenden Ansprüche,
**dadurch gekennzeichnet,**
**dass** der Anströmbereich (23) eine kuppelartige Wölbung aufweist.

5. Durchflussmesssystem nach einem der vorstehenden Ansprüche,
**dadurch gekennzeichnet,**
**dass** der zentrale Durchgangskanal (25, 25') einen Durchmesser aufweist, der entlang der Rohrachse (15) in stromabwärts weisender Richtung ansteigt.

6. Durchflussmesssystem nach einem der vorstehenden Ansprüche,
**dadurch gekennzeichnet,**
**dass** in dem zentralen Durchgangskanal (25) ein rotationssymmetrischer Zusatzkörper (27) koaxial zu dem ringförmigen Nabenkörper (17, 17') angeordnet ist.

7. Durchflussmesssystem nach Anspruch 6,
**dadurch gekennzeichnet,**
**dass** der Zusatzkörper (27) ebenfalls im Querschnitt ringförmig ist.

8. Durchflussmesssystem nach Anspruch 7,
**dadurch gekennzeichnet,**
**dass** in dem ringförmigen Zusatzkörper (27) ein innerer Durchgangskanal (29) ausgebildet ist, dessen Durchmesser entlang der Rohrachse (15) in stromabwärts weisender Richtung ansteigt.

9. Durchflussmesssystem nach einem der vorstehenden Ansprüche,
**dadurch gekennzeichnet,**
**dass** der Strömungsgleichrichter (1 1') eine stromabwärts des Nabenkörpers (17, 17') angeordnete Strömungsleiteinrichtung (50) aufweist, die wenigstens eine Lochplatte (57), einen Wabenkörper (59), ein Rohrbündel und/oder eine Düse umfasst.

10. Durchflussmesssystem nach Anspruch 9,
**dadurch gekennzeichnet,**
**dass** die Strömungsleiteinrichtung (50) eine Lochplatte (57) und einen stromabwärts davon angeordneten Wabenkörper (59) umfasst.

11. Durchflussmesssystem nach einem der vorstehenden Ansprüche,
**dadurch gekennzeichnet,**
**dass** der Strömungsgleichrichter (11, 11') eine axiale Länge aufweist, die höchstens das Doppelte und vorzugsweise höchstens das 1½ -fache des Innendurchmessers des Rohrs (13) beträgt, und/oder die einen Druckverlustbeiwert aufweist, der höchstens 8 und vorzugsweise höchstens 5,5 beträgt.

## Claims

1. A throughflow measurement system for measuring a fluid throughflow through a pipe, said throughflow measurement system comprising a measurement device, preferably an ultrasound measurement device, for performing a measurement at the fluid, in particular of its flow rate, and a flow conditioner (11, 11') arranged upstream of the measurement device for conditioning a fluid flow, said flow conditioner (11, 11') comprising:
a pipe (13) which has a pipe axis (15) and which can be flowed through by a fluid in the direction of the pipe axis (15), wherein
the flow conditioner (11, 11') comprises at least one hub body (17, 17') which is rotationally symmetrical with respect to an axis of symmetry (19) and which is fixed in the pipe (13) such that the axis of symmetry (19) coincides with the pipe axis (15), wherein the hub body (17, 17') fixed in the pipe (13) has an onflow region (23) which is arched outwardly against the onflow direction (33),
wherein the hub body (17, 17') has a diffuser section (39) in which the cross-sectional surface of the hub body (17, 17') decreases along the pipe axis (15) in a direction facing downstream,
wherein the cross-sectional surface of the onflow region (23) amounts to at least 50% and preferably at least 60% of the cross-sectional surface of the pipe (13),
wherein the diffuser section (39) adjoins the arched onflow region (23) of the hub body (17, 17') in the direction facing downstream, wherein a step (43) is formed at the end (41) of the hub body (17) disposed downstream, **characterized in that** the hub body (17, 17') is fixed in the pipe (13) by means of at least one areal web (30), and **in that** the hub body (17, 17') is annular in cross-section and has a central through passage (25, 25').

2. A throughflow measurement system in accordance with claim 1,
**characterized in that**
the hub body (17, 17') has an outer diameter (55) to be measured radially with respect to the pipe axis (15) that amounts to at least 40%, preferably at least 50%, further preferably at least 60%, and particularly preferably at least 70% of the inner diameter of the pipe (13).

3. A throughflow measurement system in accordance with one of the preceding claims,
**characterized in that**
the hub body (17, 17') is fixed in the pipe (13) by means of a star-shaped arrangement of areal webs (30).

4. A throughflow measurement system in accordance with any one of the preceding claims,
**characterized in that**
the onflow region (23) has a dome-like arch.

5. A throughflow measurement system in accordance with any one of the preceding claims,
**characterized in that**
the central through passage (25, 25') has a diameter which increases along the pipe axis (15) in the direction facing downstream.

6. A throughflow measurement system in accordance with any one of the preceding claims,
**characterized in that**
a rotationally symmetrical additional body (27) is arranged coaxially to the annular hub body (17, 17') in the central through passage (25).

7. A throughflow measurement system in accordance with claim 6,
**characterized in that**
the additional body (27) is likewise annular in cross-section.

8. A throughflow measurement system in accordance with claim 7,
**characterized in that**
an inner through passage (29), whose diameter increases along the pipe axis (15) in the direction facing downstream, is formed in the annular additional body (27).

9. A throughflow measurement system in accordance with any one of the preceding claims,
**characterized in that**
the flow conditioner (11') has a flow-conducting device (50) which is arranged downstream of the hub body (17, 17') and which comprises at least a perforated plate (57), a honeycomb body (59), a bundle of pipes, and/or a nozzle.

10. A throughflow measurement system in accordance with claim 9,
**characterized in that**
the flow-conducting device (50) comprises a perforated plate (57) and a honeycomb body (59) which is arranged downstream thereof.

11. A throughflow measurement system in accordance with any one of the preceding claims,
**characterized in that**
the flow conditioner (11, 11') has an axial length which amounts to at most twice and preferably at most 1½ times the inner diameter of the pipe (13) and/or which has a pressure loss coefficient that amounts to at most 8 and preferably at most 5.5.

## Revendications

1. Système de mesure de débit pour mesurer un débit de fluide à travers un tube, comprenant un appareil de mesure, de préférence un appareil de mesure à ultrasons, pour effectuer une mesure sur le fluide, en particulier sur sa vitesse d'écoulement, et un rectificateur d'écoulement (11, 11') disposé en amont de l'appareil de mesure pour conditionner un écoulement de fluide, comprenant :
un tube (13) qui présente un axe de tube (15) et qui peut être traversé par un fluide en direction de l'axe de tube (15),
dans lequel
le rectificateur d'écoulement (11, 11') comporte au moins un corps de moyeu (17, 17') qui présente une symétrie de révolution par rapport à un axe de symétrie (19) et qui est fixé dans le tube (13) de telle sorte que l'axe de symétrie (19) coïncide avec l'axe de tube (15), le corps de moyeu (17, 17') fixé dans le tube (13) présentant une zone d'afflux (23) bombée vers l'extérieur dans le sens opposé au sens d'afflux (33),
le corps de moyeu (17, 17') présente une section de diffuseur (39) dans laquelle la surface de section transversale du corps de moyeu (17, 17') diminue le long de l'axe de tube (15) dans le sens de l'aval,
la surface de section transversale de la zone d'afflux (23) représente au moins 50% et de préférence au moins 60% de la surface de section transversale du tube (13),
la section de diffuseur (39) se raccorde à la zone d'afflux bombée (23) du corps de moyeu (17, 17') dans le sens de l'aval,
un gradin (43) est formé à l'extrémité (41) du corps de moyeu (17) située en aval,
**caractérisé en ce que**
le corps de moyeu (17, 17') est fixé dans le tube (13) au moyen d'au moins une barrette plate (30), et
**en ce que** le corps de moyeu (17, 17') est de section transversale annulaire et présente un canal de passage central (25, 25').

2. Système de mesure de débit selon la revendication 1,
**caractérisé en ce que**
le corps de moyeu (17, 17') présente un diamètre extérieur (55) à mesurer radialement par rapport à l'axe de tube (15), qui est d'au moins 40%, de préférence d'au moins 50%, de préférence encore d'au moins 60% et de manière particulièrement préférée d'au moins 70% du diamètre intérieur du tube (13).

3. Système de mesure de débit selon l'une des revendications précédentes,
**caractérisé en ce que**
le corps du moyeu (17, 17') est fixé dans le tube (13) au moyen d'un agencement en étoile de barrettes plates (30).

4. Système de mesure de débit selon l'une des revendications précédentes,
**caractérisé en ce que**
la zone d'afflux (23) présente un bombement en forme de dôme.

5. Système de mesure de débit selon l'une des revendications précédentes,
**caractérisé en ce que**
le canal de passage central (25, 25') présente un diamètre qui augmente le long de l'axe de tube (15) dans le sens de l'aval.

6. Système de mesure de débit selon l'une des revendications précédentes,
**caractérisé en ce que**
un corps supplémentaire (27) à symétrie de révolution est disposé dans le canal de passage central (25), coaxialement au corps de moyeu annulaire (17, 17').

7. Système de mesure de débit selon la revendication 6,
**caractérisé en ce que**
le corps supplémentaire (27) est également de section transversale annulaire.

8. Système de mesure de débit selon la revendication 7,
**caractérisé en ce que**
un canal de passage intérieur (29) est formé dans le corps supplémentaire annulaire (27), dont le diamètre augmente le long de l'axe de tube (15) dans le sens de l'aval.

9. Système de mesure de débit selon l'une des revendications précédentes,
**caractérisé en ce que**
le rectificateur d'écoulement (11') comporte un dispositif de guidage de flux (50) disposé en aval du corps de moyeu (17, 17') et comprenant au moins une plaque perforée (57), un corps en nid d'abeilles (59), un faisceau de tubes et/ou une buse.

10. Système de mesure de débit selon la revendication 9,
**caractérisé en ce que**
le dispositif de guidage de flux (50) comprend une plaque perforée (57) et un corps en nid d'abeilles (59) disposé en aval de celle-ci.

11. Système de mesure de débit selon l'une des revendications précédentes,
**caractérisé en ce que**
le rectificateur d'écoulement (11, 11') a une longueur axiale qui est au plus égale à deux fois, et de préférence au plus égale à 1½ fois, le diamètre intérieur du tube (13), et/ou qui a un coefficient de perte de charge qui est au plus égal à 8, et de préférence au plus égal à 5,5.
